**Europäisches Patentamt**

**European Patent Office**

**Office européen des brevets**

(11) Publication number: **0 148 732**
**B1**

(12) **EUROPEAN PATENT SPECIFICATION**

(45) Date of publication of patent specification: **23.11.89**

(21) Application number: **84830310.3**

(22) Date of filing: **19.11.84**

(51) Int. Cl.⁴: **G 09 B 19/02**

(54) Didactic aid for the teaching of any number system.

(30) Priority: **25.11.83 IT 1944183 u**

(43) Date of publication of application:
**17.07.85 Bulletin 85/29**

(45) Publication of the grant of the patent:
**23.11.89 Bulletin 89/47**

(84) Designated Contracting States:
**AT BE CH DE FR GB LI LU NL SE**

(56) References cited:
**DE-C- 556 197**
**GB-A-1 221 059**

(73) Proprietor: **Saitta, Rinaldelli Maria Pia**
**Via Monte Cucco, 1**
**I-62027 San Severino Marche (MC) (IT)**

(72) Inventor: **Saitta, Rinaldelli Maria Pia**
**Via Monte Cucco, 1**
**I-62027 San Severino Marche (MC) (IT)**

(74) Representative: **Baldi, Claudio**
**Piazza Ghislieri, 3**
**I-60035 Jesi (Ancona) (IT)**

Courier Press, Leamington Spa, England.

## Description

The instant application for industrial patent has for its object an aid for carrying out a diadactic game in order that any "n" based number system may be learnt.

For the sake of clarity this specification will refer to the decimal system but there is nothing which prevents the realization of didactic aids suitable for the teaching of any other number systems, as will become apparent further on.

Even though the decimal system has been in use for a long time, suitable aids which make children understand that ten units of a certain order form one unit of a higher unit, are still not available.

When the abacus currently used by children the idea is given of tens and hundreds but not of a "system" of numbers.

As no suitable aids are available, teachers generally use sweets or matches to explain the system based on units of ten; forming groups of ten rarely groups of a hundred and hardly ever groups of a thousand units.

This method has various drawbacks:

a) it takes time to form these groups;

b) whilst the teacher with his/her experience can immediately recognize whether the groups are of ten, a hundred, a thousand, etc., children find it difficult;

c) for the children the groups look the same whether they are of a hundred, ten or a thousand and therefore they disregard the differences among them.

Another method used is that of making paper squares (representing the units) which are substituted by strips whenever the unit of a higher order is reached.

This method takes time and is rather laborious.

Other teachers use matches with red heads to represent the tens and matches with black heads to represent the units.

This method is suitable for bright children but slower children find it rather mechanical because they cannot understand how a match with a red head can be worth ten matches with black heads. Furthermore, they naturally tend to treat all matches alike, whatever their colour.

A didactic aid, based exactly on this principle (according to which the unit of higher value is represented by the same object, which only changes colour and not shape or dimensions), is the one described in the patent GB—A—1.221.059. The didactic aid at reference in patent GB—A—1.221.059 consists of a board on the front of which there is a series of vertical rods, side by side; on each one of these rods, there are ten cursors inserted, which can slide along it, these cursors being shaped like small barrels and being of a different colour on each rod.

The board is divided up into two areas one above the other: a top area in a plain colour which is different from the colours used to distinguish the abovementioned cursors, and a bottom area, which is coloured in vertical stripes, the colours of which correspond to those used to distinguish the aforementioned cursors.

Therefore, the colour of the board does not perform any didactic function, but is only used to camouflage the cursors, when they are in the bottom area of the board and vice-versa, to emphasize them, when they are made to slide towards the top and positioned in front of the top plain-coloured zone. In other words, the colour only serves to emphasise or vice-versa, to camouflage the cursors.

This didactic aid, presumes that the child apprehends instinctively that in the system of decimal numeration, a cursor of one colour is equivalent to ten cursors of a different colour, even if the two cursors are of the same shape and size.

By means of mnemonic and conceptual effort, the child must associate each colour with a different order of size, without being able to ressort to any reference to evaluate if one order of size is larger or smaller than another order of size: in other words, the units, the tens, and the hundreds are represented by the same cylindrical cursor, of which, however, only the colour changes each time.

As already mentioned, this mnemonic and conceptual effort is difficult for the child, who, on the other hand, has no difficulty in understanding this equivalence, if he can actually see and check that ten elements of the same shape and size are enclosed within a container of a different shape and of a larger size than each of the ten elements.

The didactic aid at reference in the patent DE—C—556196, is based on this principle; it comprises ten bars of the same shape and size, each able to sustain ten small prisms which are identical to each other in shape and size and a box which is designed to contain the ten bars.

The didactic game carried out using the aid in accordance with the herein described invention, is a mathematical one achieved with a series of containers each capable of holding ten smaller containers; containers of the same size having the same colour.

Therefore, there is a series of containers decreasing in size and of differing colours, each container holds a set of ten smaller containers one set being all of the same colour and size, another set of a different colour and size and so on. The smallest container holds ten pieces each representing a numerical unit.

The didactic aid in accordance with the instant invention also includes a desk with coloured squares which are arranged in such a way that the last square on the right is of the same colour as the unit of the first order, the penultimate square of the same colour as the second order and so on.

Finally, this aid also includes all the numerals from zero to nine to be put on to the desk inside the coloured squares, there being the same number of numerals as number of coloured squares on the desk.

At this point, objections may be raised concerning the fact that the didactic aid as per the invention is not the result of any inventive activity, making use as it does of the teaching contained in patent DE—C—556197, with regard to the idea of containers of different shape and size, each able to contain the same number of smaller containers. It must be emphasised that the inventive idea, for which patent protection is requested, is not to be limited to the ideal of grouping together and enclosing ten cubes inside a box, and ten boxes inside a bigger box, since this concept of grouping together a series of identical elements in groups of ten has always been used.

It is obvious that the use of a set of containers, each containing ten smaller containers and so on, down to the smallest container which contains ten elements, each representing the numerical unit, does not involve any new or increased didactive utility, compared to the previous art, if this set of containers and elements is not in different colours and if they are not used in combination with a board, comprising a set of coloured pigeon-holes, the colours of which coincide with the different colours used to distinguish the set of containers and the set of elements.

In other words, the didactic aid according to the invention must not be compared with previous didactic aids, through examination of each individual component separately, due to the fact that the final result can only be obtained using all the components: a set of cubes, a set of small boxes and a set of boxes, each respectively of a different colour, a board with coloured pigeon-holes, a set of cards with numbers already printed on them. In the didactic aid described in the patent GB—A—1221059, cards with numbers already printed on them are also used, the methodical arrangement of these cards by the child writing the exact number read from the board, takes place simply by respecting the position of the cursors on the board, without consideration of the fact that these cursors are each of a different colour.

On the other hand, in the didactic aid, according to the invention, it is actually the consideration and the correspondence of the colours, which allows the child to write the exact number, given the fact that each card with the number printed on it must be positioned in the pigeon-hole on the board, which is the same colour as the elements, (cubes, small boxes, or boxes), counted by the child.

With the didactic aid as per patent GB—A—1221059, the child cannot check the reason why the cursor of a certain colour is equivalent to ten cursors of the same size but of a different colour.

On the other hand, in the device according to the invention, the child can easily and rapidly check that the order of size represented by the small box of a certain colour is greater than the order of size represented by a cube of a different colour, since the child can actually see that a small box contains more cubes.

Therefore, the child not only associates different colours with different orders of size, but he can also immediately understand and check which order of size is the biggest out of two orders of size when compared to each other.

Other objects, features and advantages of the instant invention will become more apparent from the following description when taken in conjunction with the accompanying drawing which for purposes of illustration, but not of limitation shows the parts of the didactic aid necessary to objectify the units of the first, second and third orders, meaning that numbers up to 999 may be written on the desk.

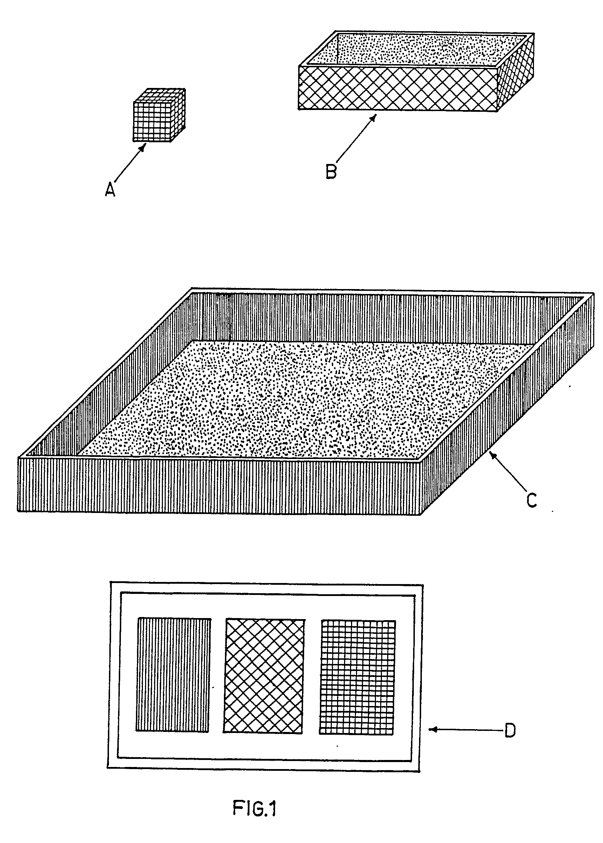

Fig. 1 is an axinometrical view illustrating an example of each series of pieces which constitutes the didactic aid in accordance with this invention.

The numerical unit is represented by a small coloured cube distinguished by the letter (A); there will be a number of these small cubes (A) equal to the maximum number obtainable with this aid, in this case 999.

The unit of the second order is represented by a small coloured box, of a different colour from the cubes (A).

This box contains exactly ten small cubes distinguished by the letter (B); there will be a number of these small boxes equal to the maximum number of tens obtainable with this aid, in this case 99.

In one preferred arrangement the word "tens" may be written on the outside of the small box (B).

The unit of the third order is represented by a box larger than the previous one and of a different colour, distinguished by the letter (C), provided to contain exactly ten small boxes (B); there will be a number of these boxes (C) equal to the maximum number of hundreds obtainable with this aid, in this case 9.

In one preferred arrangement the word "hundreds" may be written on the outside of the box (C).

The desk (D) is provided with three squares, situated side by side and each of a different colour, i.e. the last on the right is the same colour as the cubes (A), the penultimate square is of the same colour as the small boxes (B) and the first square on the right the same as the boxes (C).

The aid in accordance with this invention should be used as follows.

The child must first fill the small boxes (B) with the cubes (A), then he must fill the bigger boxes (C) with these boxes (B) until all the cubes are used up.

Then, he will count the boxes of each colour and put down the number, using the figures available on to the corresponding square panel, i.e. on to the square of the same colour.

With this procedure even a child who can only count up to ten will be able to write the number corresponding to various hundreds of units.

For example, with a ten based system if the child fills 3 boxes (C), 2 small boxes (B) is left with one cube, he will put down the figures 3, 2 and 1 on to the desk, thus writing the number 321.

Furthermore, since there is written "hundreds" on all the boxes (C), tens on all the small boxes (B), it will easily be seen that there are three hundreds, two tens and one unit.

In this way the significance of the number is presently "visually" even before it is categorised.

With this method using the aid in accordance with the instant invention, therefore, the child will begin to apprehend the way in which one "numbers", meaning that he sees how the tens, hundreds, thousands etc. are formed.

The colours of the boxes which correspond to the colours of the squares on the desk indicating the units of the same order, makes the child realize immediately that, although the figures are the same they change their significance depending on the square on to which they are put and therefore the importance of the position of the numbers can be clearly seen.

Merely for purposes of illustration we shall now describe the didactic aid when used for the teaching of a number system based on two.

a) the numerical unit comprises a small coloured cube;

b) the unit of the second order is a small coloured box provided to contain exactly two cubes;

c) the unit of the third order is a coloured box, of a different colour from the first, provided to contain exactly two boxes indicated in point b);

d) the unit of the fourth order is a coloured box of a different colour from the aforesaid ones provided to contain exactly two boxes mentioned in point c), and so on.

The desk is provided with numerous coloured squares each being of the same colour as one of the aforesaid units.

It is understood, therefore, that the aid in accordance with the instant invention may be varied so that any number system may be learnt without departure from the nature and principle thereof defined by the following claims.

## Claims

1. Didactic aid to enable any "n" based number system to be learnt, comprising:

—a series of containers (C), each designed to contain exactly "n" smaller containers (B) which are the same as each other, as far as size and colour are concerned, each of which are in turn designed to contain "n" elements (A), each of which represent a numerical unit;

—a set of cards which have numbers already printed on them

the didactic aid being characterised by the fact that the containers (C), the smaller containers (B) and the elements (A) are in three different colours and by the fact that it also comprises a board (D), with coloured pigeon-holes side by side, where one of the aforementioned cards with numbers on them is to be inserted, these pigeon-holes being positioned side by side in such a way that the last pigeon-hole on the right, is of the same colour as the unit of the first order (A), the last but one pigeon-hole being of the same colour as the unit of the second order (B), the third pigeon hole from the end being the same colour as the unit of the third order (C).

2. Didactic aid, to enable any "n" based number system to be learnt, according to claim 1, characterised by the fact that the numbers printed on the aforementioned cards from from "0" to "n−1".

## Patentansprüche

1. Didaktisches Hilfsmittel zum Erlernen der Grundzahlensystem "n" aus:

—einer Reihe von Behältern (C), von denen jeder genau "n" kleinere Behälter (B) beinhalten kann, die in der Größe und Farbe gleich sind; jeder dieser Behälter kann wiederum genau "n" Elemente (A) beinhalten, von denen jedes eine numerische Einheit darstellt;

—einer Reihe von Kärtchen mit vorgedruckten Zahlen;

Didaktisches Instrument, dadurch gekennzeichnet, daß die Behälter (C), die kleineren Behälter (B) und die Elemente (A) drei verschiedene Farben aufweisen und weiters dadurch gekennzeichnet, daß es eine Tafel (D) besitzt, die farbige, nebeneinander angeordnete Felder hat, wo eines der vorhingenannten Kärtchen mit den aufgedruckten Zahlen eingesetzt werden muß. Diese Felder sind so angeordnet, daß das letzte Feld rechts die Farbe der ersten Ordnung (A) darstellt, das vorletzte Feld die Farbe der Einheit der zweiten Ordnung (B), das drittletzte Feld die Farbe der dritten Ordnung (C).

2. Didaktisches Hilfsmittel zum Erlernen der Grundzahlensysteme "n", gemäß Patentanspruch 1, dadurch gekennzeichnet, daß die auf den Kärtchen aufgedruckten Nummern von "0" bits "n−1" gehen.

## Revendications

1. Equipement didactique pour aider à l'étude des systèmes de numération sur base "n", comprenant:

—une série de boîtes (C), chacune apte à contenir exactement "n" boîtes plus petites (B), identiques en ce qui concerne leur couleur et leurs dimensions, chacune de ces dernières pouvant à leur tour contenir exactement "n" éléments (A) qui représentent chacun une unité numérique;

—une série de fiches avec des chiffres imprimés;

équipement didactique caractérisé par le fait que les boîtes (C), les boîtes plus petites (B) et les éléments (A) sont de trois couleurs différentes et par le fait d'inclure aussi un tableau (D) avec des cases colorées et juxtaposées où les susmentionnées fiches avec des chiffres imprimés doivent être disposées, étant lesdites cases juxtaposées de manière à ce que la dernière case de droite a la même couleur de l'unité de premier ordre (A), l'avant dernière la couleur des unités de second ordre (B) et la dernière la couleur des unités de troisième ordre (C).

2. Equipement didactique pour aider à l'étude des systèmes de numération sur base "n", selon la revendication 1), caractérisée par le fait que les chiffres imprimés sur les fiches susmentionnées vont de "0" à "n−1".

FIG.1